# EUROPEAN PATENT APPLICATION

(11) **EP 3 855 322 A2**
(43) Date of publication of application: **28.07.2021**
(21) Application number: 21164153.5
(22) Date of filing: 23.03.2021
(51) Int. Cl.: G06F 16/29

(54) **ROAD NETWORK DATA PROCESSING METHOD AND DEVICE, ELECTRONIC APPARATUS, AND COMPUTER STORAGE MEDIUM**

(30) Priority: 02.06.2020 CN 202010491048
(71) Applicant: BAIDU ONLINE NETWORK TECHNOLOGY (BEIJING) CO., LTD., Beijing 100085 (CN)
(72) Inventor: LIN, Jinzhu, BEIJING, 100085 (CN); WANG, Dong, BEIJING, 100085 (CN)
(74) Representative: Brevalex

(57) **Abstract**

A road network data processing method and device, an electronic apparatus, and a computer storage medium are provided, which are related to a field of computer technology with deep learning. The specific implementation is: performing grouping on elements of initial road network data according to a correlation relationship among the elements, to obtain at least one element group; determining an element group to be deleted from the initial road network data according to an amount of element included in each element group of the at least one element group; and deleting the element group to be deleted from the initial road network data, to obtain updated road network data. Isolated roads may be deleted from road network data, thereby improving the accuracy and recall rate of subsequent navigation and route computation.

## Description

### TECHNICAL FIELD

The present application relates to a field of computer, and in particular, to a road network data processing method and device, an electronic apparatus, and a computer storage medium.

### BACKGROUND

Road network data is key data in map applications. In road network data, road connectivity is expressed through a topological relationship of endpoints and a road. Generally, "endpoint" is used to express an endpoint of a road, and "road" is used to express a road. In actual environments, there are often isolated roads, such as a separate road not connected to any other road, a road not passable in a closed environment, etc. If data related to these isolated roads are retained in road network data, isolated roads may be contained in navigation routes, resulting in poor effectiveness of a subsequent navigation.

### SUMMARY

A road network data processing method and device, an apparatus, and a storage medium are provided in the present application.

According to an aspect of the present application, a road network data processing method is provided. The method includes:
performing grouping on elements of initial road network data according to a correlation relationship among the elements, to obtain at least one element group;
determining an element group to be deleted from the initial road network data according to an amount of element included in each element group of the at least one element group;
deleting the element group to be deleted from the initial road network data, to obtain updated road network data.

According to another aspect of the present application, a road network data processing device is provided. The device includes:
a grouping module, configured to perform grouping on elements of initial road network data according to a correlation relationship among the elements, to obtain at least one element group;
a deletion module, configured to determine an element group to be deleted from the initial road network data according to an amount of element included in each element group of the at least one element group;
an update module, configured to delete the element group to be deleted from the initial road network data, to obtain updated road network data.

According to another aspect of the present application, an electronic apparatus is provided. The electronic apparatus includes:
at least one processor; and
a memory communicatively connected to the at least one processor, wherein
the memory stores instructions executable by the at least one processor, the instructions are executed by the at least one processor to enable the at least one processor to perform the method provided according to any one of embodiments of the present application.

According to another aspect of the present application, a non-transitory computer readable storage medium for storing computer instructions is provided. The computer instructions, when executed by a computer, cause the computer to perform the method provided according to any one of embodiments of the present application.

By applying the scheme according to the present application, data related to isolated roads may be deleted from road network data, thereby improving the accuracy and recall rate of navigation and route computation in map applications using the road network data.

It should be understood that the content described herein is not intended to denote key or critical elements of embodiments of the present application nor to limit the scope of the present application. Further features of the present application may be readily understood from the following description.

### BRIEF DESCRIPTION OF THE DRAWINGS

The drawings are used to better understand the scheme and do not constitute a limitation to the present application, wherein:
FIG. 1 is a schematic diagram showing a road network data processing method according to a first embodiment of the present application;
FIG. 2 is a schematic diagram showing vertexes and edges according to a first embodiment of the present application;
FIG. 3 is a schematic diagram showing element groups according to a second embodiment of the present application;
FIG. 4A is a schematic diagram showing a road network data processing method according to a third embodiment of the present application;
FIG. 4B to FIG. 4D are schematic diagrams showing road network grouping of a road network data processing method according to a third embodiment of the present application;
FIG. 5 is a schematic structural diagram showing a road network data processing device according to a fourth embodiment of the present application;
FIG. 6 is a schematic structural diagram showing a road network data processing device according to a fifth embodiment of the present application;
FIG. 7 is a schematic structural diagram showing a road network data processing device according to a sixth embodiment of the present application;
FIG. 8 is a schematic structural diagram showing a road network data processing device according to a seventh embodiment of the present application; and
FIG. 9 is a block diagram showing an electronic apparatus for implementing a road network data processing method according to an embodiment of the present application.

### DETAILED DESCRIPTION

The exemplary embodiments of the application will be described below in combination with drawings, including various details of the embodiments of the present application to facilitate understanding, which should be considered as exemplary only. Therefore, those of ordinary skill in the art should realize that various changes and modifications can be made to the embodiments described herein without departing from the scope and spirit of the present application. Likewise, descriptions of well-known functions and structures are omitted in the following description for clarity and conciseness.

In embodiments of the present application, data related to isolated roads to be deleted are identified in road network data, and the data are then deleted therefrom, to improve the recall rate of subsequent route navigation (route computation).

It should be noted that the road network data processing method provided according to embodiments of the present application may be executed by a server or a terminal device.

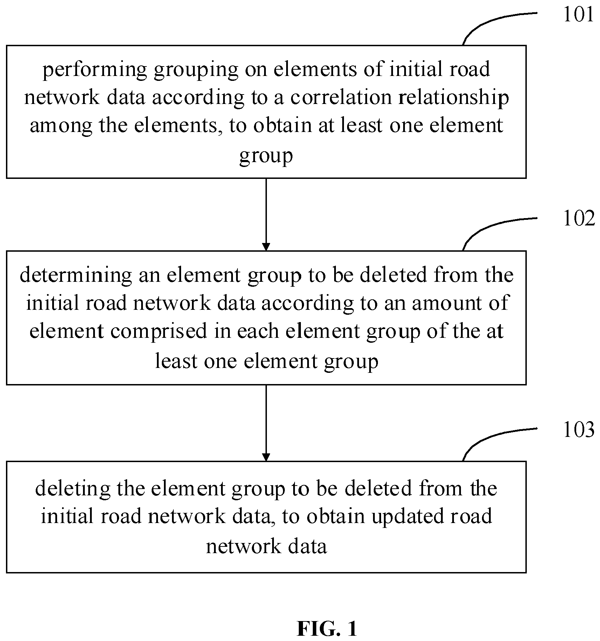

As shown in FIG. 1, a road network data processing method provided according to a first embodiment of the present application includes:
S101: performing grouping on elements of initial road network data according to a correlation relationship among the elements, to obtain at least one element group.

In S101, the performing grouping on elements of initial road network data according to a correlation relationship among the elements may be grouping the elements having a connection relationship with each other into a group.

For example, endpoints having a connection relationship are sorted into one group, and each element group includes endpoints having a connection relationship and a road between the endpoints. Alternatively, and/or in addition, roads having a connection relationship are sorted into one group, and each element group includes roads having the connection relationship and endpoints between the roads.

In each sorted group, any one endpoint has a connection relationship with at least one of the remaining endpoints. Alternatively, and/or in addition, any one road has a connection relationship with at least one of the remaining roads.

In this embodiment, an element group includes elements and a connection relationship therebetween. For example, if elements are endpoints, an element group includes endpoints and roads between the endpoints. For another example, if elements are roads, an element group includes roads and endpoints between the roads.

S102: determining an element group to be deleted from the initial road network data according to an amount of element included in each element group of the at least one element group.

As an implementation, in S102, an element group having a relatively small number of elements in initial road network data may be determined as an element group to be deleted.

In this embodiment, considering that in general, non-isolated roads have a large number relative to isolated roads, and the amount of road or the amount of endpoint related to isolated roads are relatively small, isolated roads are selected and/or determined according to the amount of element in element groups. In one specific implementation, an element group to be deleted from initial road network data may be determined according to the amount of certain element contained in each element group (for example, the amount of road or the amount of endpoint of roads).

In another implementation, an element group to be deleted from initial road network data may also be determined according to a sum of the amount of various elements contained in each element group (for example, a sum of the amount of road, and the amount of endpoint of roads).

S103: deleting the element group to be deleted from the initial road network data, to obtain updated road network data.

In S103, an element group to be deleted from the initial road network data is deleted, to obtain an updated road network data. The updated road network data may be used to obtain a new map application.

In an implementation of the first embodiment, deleting an element group to be deleted from initial road network data may be: removing an element group to be deleted from initial road network data directly, and keeping remaining element groups. The remaining element groups constitute updated road network data.

In another implementation of the first embodiment, deleting an element group to be deleted from initial road network data may also be: extracting element groups rather than the element group to be deleted, from initial road network data, and generating updated road network data based on the extracted elements groups.

In embodiments of the present application, elements in initial road network data or in updated road network data may include endpoints and/or a road. In embodiments of the present application, initial road network data or updated road network data is data applicable to a map application.

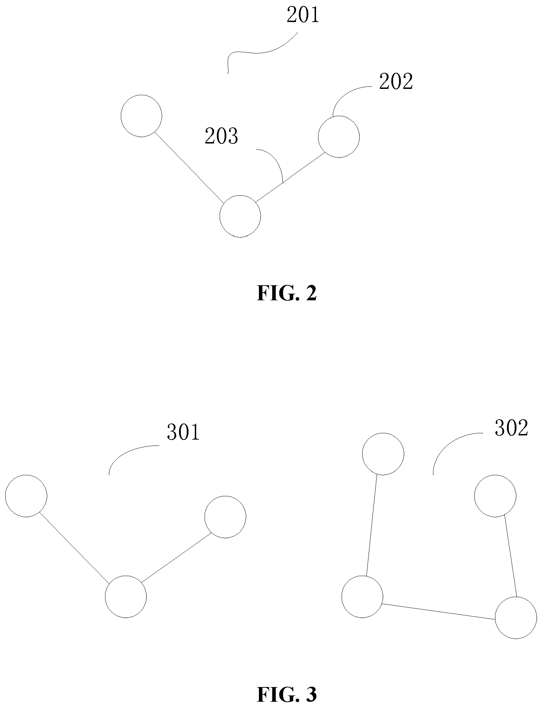

As an implementation of a first embodiment of the present application, an element group is shown in FIG. 2. The element group 201 includes three endpoints 202 and two roads 203. The three endpoints 202 are located at two ends of the two roads 203, respectively. Any two endpoints in the element group may be reachable to each other, directly or indirectly, while any one of the endpoints in the element group is unreachable to an endpoint in any other element group.

In a second embodiment of the present application, a road network data processing method still includes steps shown in FIG. 1. On this basis, elements include endpoints of roads in a road network, and the performing grouping on elements of initial road network data according to a correlation relationship among the elements, to obtain at least one element group, further includes:
determining a connection relationship among endpoints of all roads in the initial road network data by traversing the endpoints of the roads;
determining endpoints associated with at least one road and connectable to each other according to the connection relationship among the endpoints of the roads;
performing grouping on respective endpoints associated with the at least one road and connectable to each other, to obtain the at least one element group.

In this embodiment, a connection relationship between endpoints of roads may refer to: whether there is a road between endpoints, which may connect the endpoints. A group of endpoints of roads, connectable to each other, may refer to: any two endpoints of roads in an endpoint group are reachable to each other by roads. As shown in FIG. 3, in this embodiment, any two endpoints in the element group 301 are reachable to each other, directly or indirectly, and any two endpoints in the element group 302 are also reachable to each other, directly or indirectly. However, any endpoint in the element group 301 is unreachable to any endpoint in the element group 302.

In this embodiment, sorting each group of endpoints of roads reachable to each other into a group includes sorting each endpoint of roads reachable to each other, and the roads between the endpoints into a group.

In another implementation of the second embodiment of the present application, elements include a road in a road network, accordingly, the performing grouping on the elements of the initial road network data according to the correlation relationship among the elements, to obtain the at least one element group, includes:
determining a connection relationship among all roads in the initial road network data by traversing the roads;
determining a group of roads reachable to each other according to the connection relationship among the roads;
sorting each group of roads reachable to each other into a group, to obtain respective element groups. Further, the sorting each group of roads reachable to each other into a group, to obtain respective element group includes sorting roads reachable to each other and endpoints at two ends of the roads into a group, to obtain respective element groups. It can be seen that the second embodiment of the present application mainly differs from the first embodiment of the present application shown in FIG. 1 in an expanded explanation of how to group the elements. Since the amount of element reflects the scale of roads, and isolated roads often have fewer elements, data related to isolated roads may be selected and/or determined in road network data, and then deleted therefrom, so that in subsequent route computation operations, the influence on route computation by isolated roads in road network data may be avoided.

In another embodiment, a road network data processing method still includes steps shown in FIG. 1. On this basis, elements further include a road in a road network, and the deleting the element group to be deleted from the initial road network data, to obtain the updated road network data includes:
determining first traffic rule data corresponding to endpoints of a road in the element group to be deleted, and second traffic rule data corresponding to the road in the element group to be deleted;
deleting the element group to be deleted, the first traffic rule data and the second traffic rule data from the initial road network data, to obtain the updated road network data.

According to the scheme provided in this embodiment, elements of initial road network data are sorted according to a connection relationship among the elements, to obtain at least one element group. Then, an element group to be deleted is determined according to the amount of element, and the element group to be deleted is deleted. Finally, updated road network data is obtained according to the initial road network data after the deletion.

The first traffic rule data and the second traffic rule data may include information indicating an exit direction of a certain intersection. For example, if an exit direction sign is set for an intersection in the element group to be deleted, date related to the exit direction sign is also deleted when deleting the data related to the element group.

Specifically, for example, a deceleration prompt set at an intersection indicates that a speed from the intersection (endpoint) to a first road connected to the intersection should not exceed a specified value. If an element group to be deleted contains the deceleration prompt, the deceleration prompt should be deleted together with the element group to be deleted. For another example, a deceleration prompt set at an intersection may also indicate that a speed from a second road connected to the intersection to the intersection (endpoint), and then to a third road connected to the intersection, should not exceed a specified value.

The first traffic rule data and the second traffic rule data may be the same, such as a same traffic rule set in a road and at endpoints at two ends of the road, so that the first traffic rule data corresponding to the endpoints of the road and the second traffic rule data corresponding to the road are the same. Specifically, for example, in case that an element group to be deleted includes one road and two endpoints, and a deceleration sign set in the road, the first traffic rule data and the second traffic rule data may be date related to the deceleration sign. The deceleration sign is deleted when deleting the element group. It can be seen that the main difference between this embodiment and the embodiment shown in FIG. 1 lies in the expanded explanation of how to obtain an updated road network data. In this embodiment, when isolated roads are deleted, traffic rule data is also deleted together, thereby avoiding any interference on navigation caused by the retention of traffic rule data that has nothing to do with the remaining roads in the road network data.

In another embodiment, a road network data processing method includes steps shown in FIG. 1. On this basis, the determining the element group to be deleted from the initial road network data according to the amount of element included in each element group of the at least one element group further includes:
determining an element group with an amount of element less than an element amount threshold as the element group to be deleted.

In this embodiment, the element amount threshold may be a maximum amount of element in an element group to be deleted. For example, if the element amount threshold is 3, an element group with the amount of element less than 3 (or no more than 3) may be determined as an element group to be deleted. Specifically, for example, if elements are endpoints, and the element amount threshold is 5, an element group with the amount of endpoint less than 5 is determined as an element group to be deleted. For another example, if elements are roads, and the element number threshold is 5, an element group with the amount of road less than 5 is determined as an element group to be deleted.

As an implementation of this embodiment, the above element amount threshold may be set such that all of the element groups correspond to one element number threshold, which may also be set based on actual situations. Alternatively, different element amount threshold may be set for different element groups. Alternatively, some element groups may be set with a same element amount threshold, some other element groups may be set with another same element amount threshold, and yet some other element groups may be set with yet some other element number threshold. Alternatively, other setting manners may exist, which are not exhaustedly repeatedly here.

It can be seen that this embodiment differs from the embodiment shown in FIG. 1 mainly in the expanded explanation of the specific manner of determining an element group to be deleted. In this embodiment, an element amount threshold is set, and an element group with an amount of element less than the element amount threshold is determined as an element group to be deleted, so that it is simpler to determine whether an element group needs to be deleted.

In another embodiment, a road network data processing method still includes steps shown in FIG. 1. On this basis, the determining an element group to be deleted from the initial road network data according to an amount of element included in each element group of the at least one element group further includes:
determining an element group with an amount of element less than an element amount threshold as the element group to be deleted.

Further, in this embodiment, determining an element amount threshold for an element group may further include:
determining an element amount threshold corresponding to each element group of the at least one element group, according to an environmental factor corresponding to each element group of the at least one element group.

As a specific implementation of this embodiment, for implementing a road network data processing method, types of environmental factors may be set. For each type of environmental factors, different corresponding element amount threshold are set. It is also possible to set a first element amount threshold corresponding to an element group without any environmental factor, and a second element amount threshold corresponding to an element group with an environmental factor.

As a specific implementation of this embodiment, a deep learning model may be established, so that the model may determine an appropriate element amount threshold according to an environmental factor.

It can be seen that compared with the embodiment shown in FIG. 1, according to this embodiment, an implementation for determining an element group to be deleted according to an element amount threshold is provided, and how to determine an element amount threshold is further explained. In this embodiment, environmental factors of an element group may include architectural elements around a road, such as a wall, a gate, etc., and environmental factors may cause an element amount threshold to change. For example, a road with a wall and a gate does not allow outsiders to enter and exit at will. Therefore, such architectural elements may increase an element amount threshold. An element amount threshold may be adjusted based on different environmental factors, so that a determination of an element group to be deleted is more accurate.

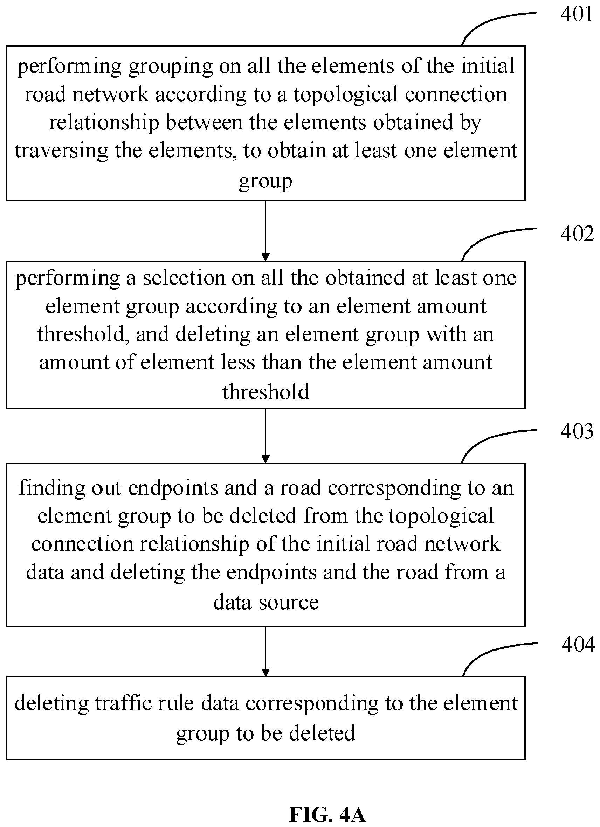

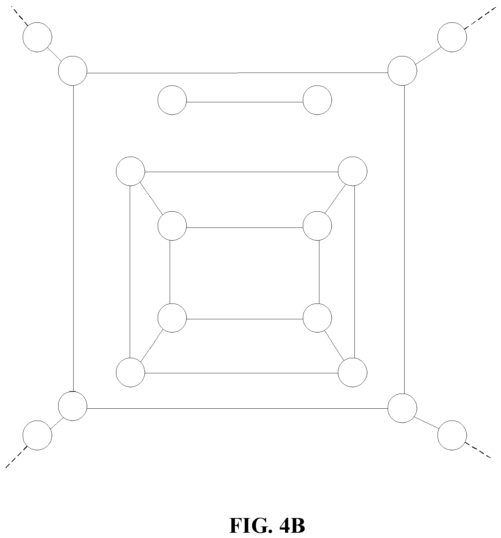

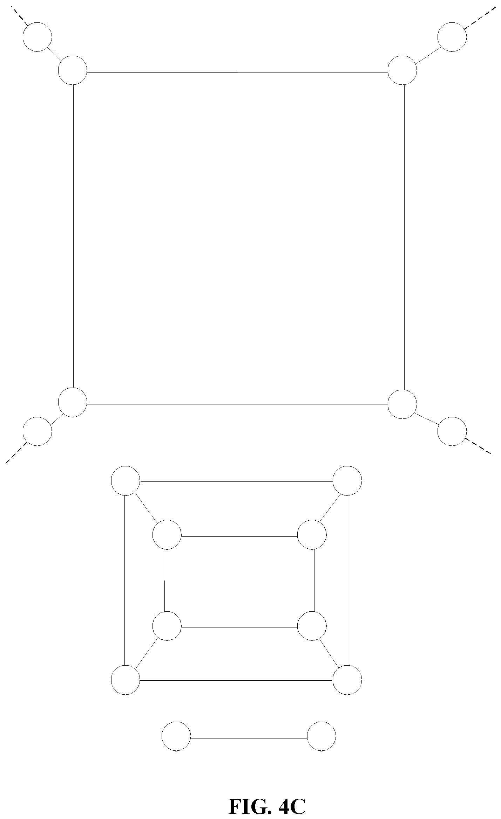

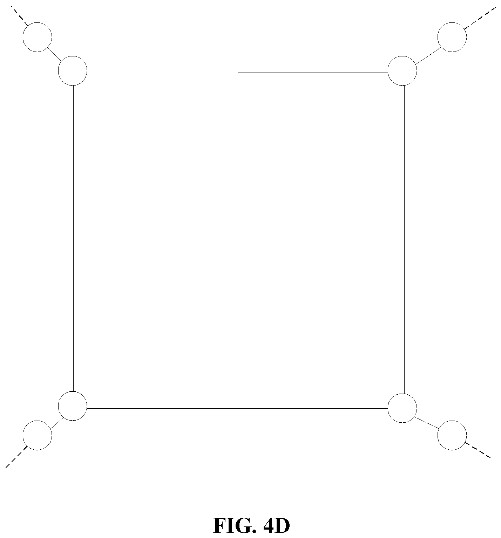

In a third embodiment of the present application, a road network data processing method includes steps shown in FIG. 4A:
S401: performing grouping on all the elements of the initial road network according to a topological connection relationship between the elements obtained by traversing the elements, to obtain at least one element group. Any two endpoints in each element group are reachable to each other through other endpoints and roads in the group. For example, FIG. 4B shows initial road network data, in which endpoints are the elements. The endpoints are grouped according to a connection relationship therebetween, to obtain three element groups, as shown in FIG. 4C. Finally, the element groups are selected and/or filtered according to a preset element amount threshold, to obtain an updated road network data after selection and/or filtration, as shown in FIG. 4D.
S402: performing a selection on all the obtained at least one element group according to an element amount threshold and deleting an element group with an amount of element less than the element amount threshold, i.e., an element group to be deleted.
S403: finding out endpoints and a road corresponding to an element group to be deleted from the topological connection relationship of the initial road network data and deleting the endpoints and the road from a data source.
S404: deleting traffic rule data corresponding to the element group to be deleted. In road network data, there is some other guidance data existed as independent elements, such as data related to a traffic rule, an exit direction, etc., which are existed in relationships of point-line and line-point-line. When an element group to be deleted is deleted, those independent elements should also be deleted.

The deleted element group will no longer be used to generate a navigation route during subsequent navigation route computations.

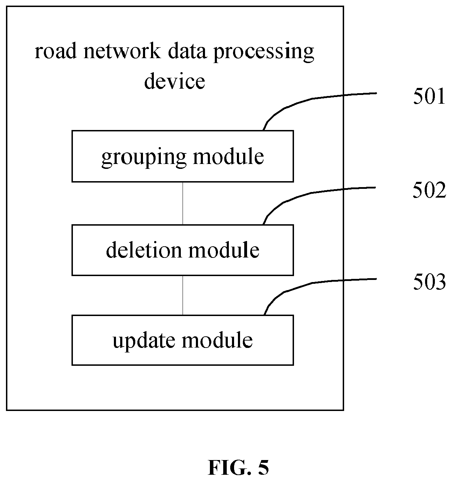

In a fourth embodiment of the present application, a road network data processing device is provided. The main component of the device is as shown in FIG. 5, specifically, the device includes:
a grouping module 501, configured to perform grouping on elements of initial road network data according to a correlation relationship among the elements, to obtain at least one element group;
a deletion module 502, configured to determine an element group to be deleted from the initial road network data according to an amount of element included in each element group of the at least one element group;
an update module 503, configured to delete the element group to be deleted from the initial road network data, to obtain updated road network data.

In the embodiment, as to specific processing of the grouping module 501, the deletion module 502, and the update module 503 of the road network data processing device, reference may be made to corresponding S101, S102 and S103 in above embodiment shown in FIG. 1.

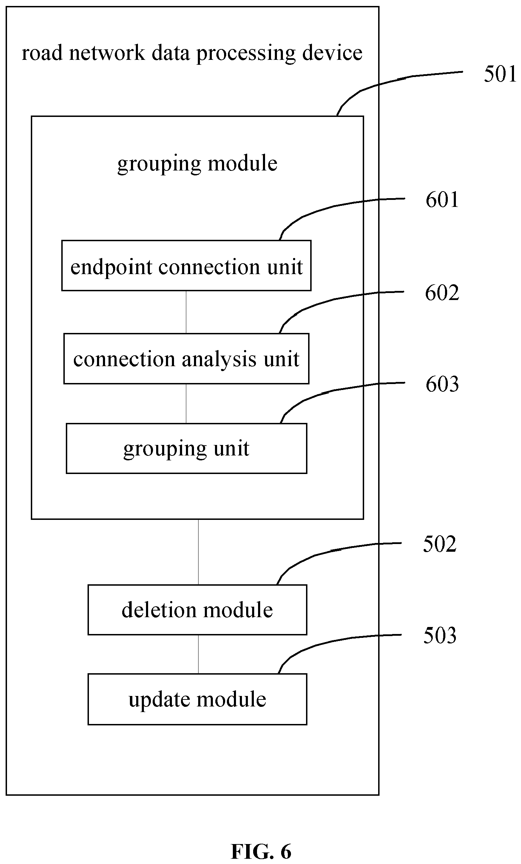

A road network data processing device provided in a fifth embodiment of the present application mainly includes the grouping module 501, the deletion module 502, and the update module 503 shown in FIG. 5. On this basis, as shown in FIG. 6, elements include endpoints of a road of a road network, and the grouping module 501 further includes:
an endpoint connection unit 601, configured to determine a connection relationship among endpoints of all roads in the initial road network data by traversing the endpoints of the roads;
a connection analysis unit 602, configured to determine endpoints associated with at least one road and connectable to each other according to the connection relationship among the endpoints of the roads;
a grouping unit 603, configured to perform grouping on respective endpoints associated with the at least one road and connectable to each other, to obtain the at least one element group.

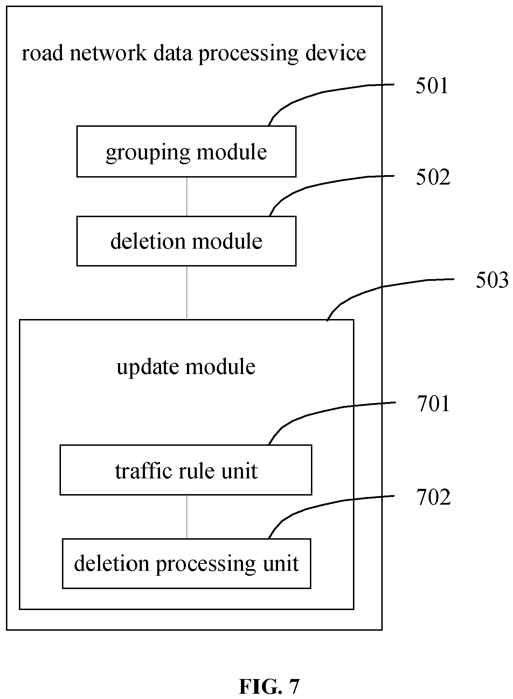

A road network data processing device provided in a sixth embodiment of the present application mainly includes the grouping module 501, the deletion module 502, and the update module 503 shown in FIG. 5. On this basis, as shown in FIG. 7, the update module 503 includes:
a traffic rule unit 701, configured to determine first traffic rule data corresponding to endpoints of a road in the element group to be deleted, and second traffic rule data corresponding to the road in the element group to be deleted;
a deletion processing unit 702, configured to delete the element group to be deleted, the first traffic rule data and the second traffic rule data from the initial road network data, to obtain the updated road network data.

As an implementation of the fifth embodiment, the deletion module is further configured to:
determine an element group with an amount of element less than an element amount threshold as the element group to be deleted.

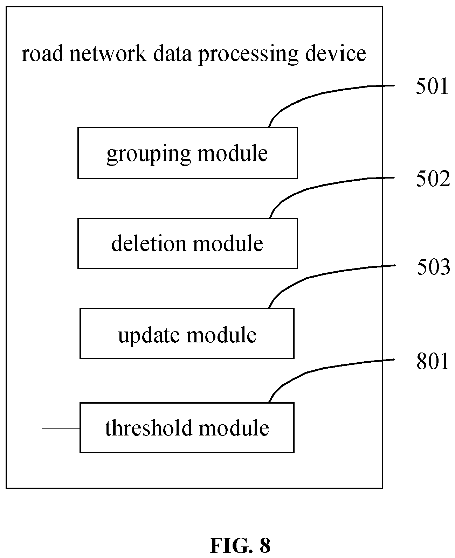

A road network data processing device is provided in a seventh embodiment of the present application mainly includes the grouping module 501, the deletion module 502, and the update module 503 shown in FIG. 5. On this basis, as shown in FIG. 8, the road network data processing device further includes:
a threshold module 801, configured to determine an element amount threshold corresponding to each element group of the at least one element group, according to an environmental factor corresponding to each element group of the at least one element group.

According to an embodiment of the present application, an electronic apparatus and a readable storage medium are provided in the present application.

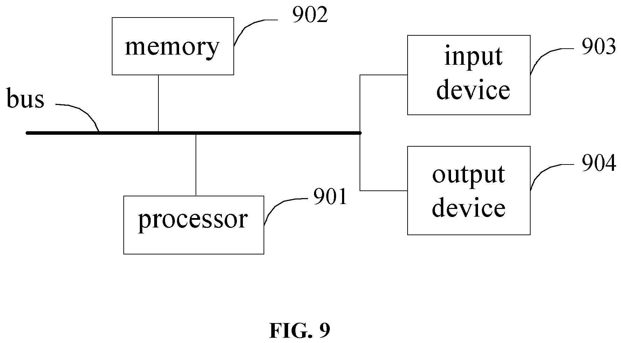

As shown in FIG. 9, it is a block diagram showing an electronic apparatus applied with a road network data processing method according to an embodiment of the present application. The electronic apparatus is intended to represent various forms of digital computers, such as laptop computers, desktop computers, workbenches, personal digital assistants, servers, blade servers, mainframe computers, and other suitable computers. The electronic apparatus may also represent various forms of mobile devices, such as personal digital processors, cellular phones, intelligent phones, wearable devices, and other similar computing devices. Components shown in the present application, their connections and relations, and their functions are merely examples, and are not intended to limit the implementation of the application described and/or required herein.

As shown in FIG. 9, the electronic apparatus includes: one or more processors 901, a memory 902, and interfaces for connecting various components, including a high-speed interface and a low-speed interface. The various components are interconnected using different buses and may be mounted on a common motherboard or otherwise installed as required. The processor may process instructions executed within the electronic apparatus, including instructions for storing in or on a memory, to display graphical information of a Graphical User Interface (GUI) on an external input/output device (such as a display device coupled to the interface). In other implementations, multiple processors and/or multiple buses may be used with multiple memories and multiple memories, if desired. Similarly, multiple electronic apparatuses may be connected, each apparatus providing some of the necessary operations (for example, as a server array, a group of blade servers, or a multiprocessor system). In FIG. 9, one processor 901 is shown as an example.

The memory 902 is a non-transitory computer-readable storage medium provided in the present application. The memory stores instructions executable by at least one processor, so that the at least one processor executes a road network data processing method provided in the present application. The non-transitory computer-readable storage medium of the present application stores computer instructions, which are configured to enable a computer to execute a road network data processing method provided in the present application.

As a non-transitory computer-readable storage medium, the memory 902 may be used to store non-transitory software programs, non-transitory computer executable programs, and modules, such as program instructions/modules corresponding to a road network data processing method in embodiments of the present application (e.g., the grouping module 501, the deletion module 502, and the update module 503 shown in FIG. 5). The processor 901 executes various functional applications and data processing of the server by running non-transitory software programs, instructions, and modules stored in the memory 902, that is, to implement a road network data processing method in foregoing method embodiments.

The memory 902 may include a storage program area and a storage data area, where the storage program area may be used to store an application program required by an operating system or for at least one function; the storage data area may be used to store data created according to the use of an electronic apparatus applied with road network data processing. In addition, the memory 902 may include a high-speed random-access memory, and may also include a non-transitory memory, such as at least one magnetic disk storage device, a flash memory device, or other non-transitory solid-state storage device. In some embodiments, the memory 902 may optionally include a memory set remotely relative to the processor 901, and these remote memories may be connected to the electronic apparatus applied with road network data processing through a network. Examples of the above network include, but are not limited to, an Internet, an intranet, a local area network, a mobile communication network, and combinations thereof.

An electronic apparatus applied with a road network data processing method according to an embodiment of the present application may further include an input device 903 and an output device 904. The processor 901, the memory 902, the input device 903, and the output device 904 may be connected through a bus or in other manners. In FIG. 9, a connection through a bus is shown as an example.

The input device 903 may receive input numeric or character information, and generate key signal inputs related to a user setting and a function control of an electronic apparatus applied with a road network data processing method, such as a touch screen, a keypad, a mouse, a trackpad, a touchpad, a pointing stick, one or more mouse buttons, a trackball, a joystick and other input devices. The output device 904 may include a display device, an auxiliary lighting device (for example, an LED), a haptic feedback device (for example, a vibration motor), and the like. The display device may include, but is not limited to, a Liquid Crystal Display (LCD), a Light Emitting Diode (LED) display, and a plasma display. In some implementations, the display device may be a touch screen.

Various implementations of the systems and technologies described herein may be implemented in a digital electronic circuit system, an integrated circuit system, an application specific integrated circuit (ASIC), a computer hardware, a firmware, a software, and/or combinations thereof. These various implementations may include: implementations in one or more computer programs, where the one or more computer programs are executable and/or interpretable on a programmable system including at least one programmable processor, programmable processor, where the programmable processor may be a dedicated or general-purpose programmable processor that may receive data and instructions from a storage system, at least one input device, and at least one output device, and may transmit the data and instructions to the storage system, the at least one input device, and the at least one output device.

These computing programs (also known as programs, software, software applications, or codes) include machine instructions of a programmable processor and may be implemented by using a high-level procedural and/or object-oriented programming language, and/or an assembly/machine language. As used herein, the terms "machine-readable medium" and "computer-readable medium" refer to any computer program product, apparatus, and/or device used to provide machine instructions and/or data to a programmable processor (for example, a magnetic disk, an optical disk, a memory, and a programmable logic device (PLD)), including machine-readable media that receives machine instructions as machine-readable signals. The term "machine-readable signal" refers to any signal used to provide machine instructions and/or data to a programmable processor.

In order to provide an interaction with a user, systems and techniques described herein may be implemented on a computer, where the computer includes: a display device (for example, a Cathode Ray Tube (CRT) or liquid crystal display (LCD) monitor) for displaying information to a user; and a keyboard and pointing device (such as a mouse or a trackball) through which a user may provide input to a computer. Other kinds of devices may also be used to provide interaction with a user. For example, a feedback provided to a user may be a sensory feedback in any form (for example, a visual feedback, an auditory feedback, or a haptic feedback), and a user input (including an acoustic input, a voice input, or a tactile input) may be received in any form.

The systems and technologies described herein may be implemented in a computing system including a background component (for example, as a data server), a computing system including a middleware component (for example, an application server), or a computing system including a front-end component (for example, a user computer with a graphical user interface or a web browser, through which the user may interact with an implementation of the systems and technologies described herein), or a computer system including any combination of such a background component, a middleware component, or a front-end component. The components of the system may be interconnected by any form or medium of digital data communication (such as, a communication network). Examples of a communication network include a Local Area Network (LAN), a Wide Area Network (WAN), and the Internet.

A computer system may include a client and a server. The client and the server are generally remote from each other, and usually interact with each other through a communication network. A relationship between the client and the server is generated by computer programs which run on corresponding computers and have a client-server relationship with each other.

By applying technical schemes according to embodiments of the present application, grouping on elements of initial road network data is performed according to a connection relationship among the elements, to obtain at least one element groups. Then, an element group to be deleted is determined according to the amount of element, and the element group to be deleted is deleted. Finally, updated road network data is obtained according to the initial road network data after the deletion. Since the amount of element reflects the scale of roads, and isolated roads often have fewer elements, data related to isolated roads may be selected and/or determined in road network data, and then deleted therefrom, so that in subsequent route computation operations, the influence on route computation by isolated roads in road network data may be avoided.

It should be understood the steps in the various processes described above may be reordered or omitted, or other steps may be added therein. For example, the steps described in the application may be performed parallelly, sequentially, or in different orders, as long as the desired results of the technical solutions disclosed in the application may be achieved, to which no limitation is made herein.

The embodiments above do not constitute a limitation on the protection scope of the present application. It should be understood by those skilled in the art that various modifications, combinations, sub-combinations, and substitutions may be available according to design requirements and other factors. Any modifications, equivalent replacements and improvements made within the spirit and principle of the present application shall be covered within the protection scope of the present application.

## Claims

1. A road network data processing method, comprising:
performing (S101) grouping on elements of initial road network data according to a correlation relationship among the elements, to obtain at least one element group;
determining (S102) an element group to be deleted from the initial road network data according to an amount of element comprised in each element group of the at least one element group; and
deleting (S103) the element group to be deleted from the initial road network data, to obtain updated road network data.

2. The road network data processing method according to claim 1, wherein the elements comprise endpoints of a road, and the performing (S101) grouping on the elements of the initial road network data according to the correlation relationship among the elements, to obtain the at least one element group, comprises:
determining a connection relationship among endpoints of all roads in the initial road network data by traversing the endpoints of the roads;
determining endpoints associated with at least one road and connectable to each other according to the connection relationship among the endpoints of the roads; and
performing grouping on respective endpoints associated with the at least one road and connectable to each other, to obtain the at least one element group.

3. The road network data processing method according to claim 1 or 2, wherein the elements further comprise a road, and the deleting (S103) the element group to be deleted from the initial road network data, to obtain the updated road network data, comprises:
determining first traffic rule data corresponding to endpoints of a road in the element group to be deleted, and second traffic rule data corresponding to the road in the element group to be deleted; and
deleting the element group to be deleted, the first traffic rule data and the second traffic rule data from the initial road network data, to obtain the updated road network data.

4. The road network data processing method according to any one of claims 1 to 3, wherein the determining (S102) the element group to be deleted from the initial road network data according to the amount of element comprised in each element group of the at least one element group comprises:
determining an element group with an amount of element less than an element amount threshold as the element group to be deleted.

5. The road network data processing method according to claim 4, further comprising:
determining an element amount threshold corresponding to each element group of the at least one element group, according to an environmental factor corresponding to each element group of the at least one element group.

6. A road network data processing device, comprising:
a grouping module (501), configured to perform grouping on elements of initial road network data according to a correlation relationship, to obtain at least one element group;
a deletion module (502), configured to determine an element group to be deleted from the initial road network data according to an amount of element comprised in each element group of the at least one element group; and
an update module (503), configured to delete the element group to be deleted from the initial road network data, to obtain updated road network data.

7. The road network data processing device according to claim 6, wherein the elements comprise endpoints of a road, and the grouping module (501) comprises:
an endpoint connection unit (601), configured to determine a connection relationship among endpoints of all roads in the initial road network data by traversing the endpoints of the roads;
a connection analysis unit (602), configured to determine endpoints associated with at least one road and connectable to each other according to the connection relationship among the endpoints of the roads; and
a grouping unit (603), configured to perform grouping on respective endpoints associated with the at least one road and connectable to each other, to obtain the at least one element group.

8. The road network data processing device according to claim 6 or 7, wherein the update module (503) comprises:
a traffic rule unit (701), configured to determine first traffic rule data corresponding to endpoints of a road in the element group to be deleted, and second traffic rule data corresponding to the road in the element group to be deleted; and
a deletion processing unit (702), configured to delete the element group to be deleted, the first traffic rule data and the second traffic rule data from the initial road network data, to obtain the updated road network data.

9. The road network data processing device according to any one of claims 6 to 8, wherein the deletion module (502) is further configured to:
determine an element group with an amount of element less than an element amount threshold as the element group to be deleted.

10. The road network data processing device according to claim 9, further comprising:
a threshold module (801), configured to determine an element amount threshold corresponding to each element group of the at least one element group, according to an environmental factor corresponding to each element group of the at least one element group.

11. An electronic apparatus, comprising:
at least one processor (901); and
a memory (902) communicatively connected to the at least one processor (901), wherein
the memory (902) stores instructions executable by the at least one processor (901), the instructions, when executed by the at least one processor (901), enable the at least one processor (901) to perform the method according to any one of claims 1 to 5.

12. A computer-readable storage medium for storing computer instructions, wherein the computer instructions, when executed by a computer, cause the computer to implement the method according to any one of claims 1 to 5.

13. A computer program product comprising computer executable instructions stored thereon, wherein the executable instructions, when executed by a processor (901), cause the processor (901) to perform the method according to any one of claims 1 to 5.
